Europäisches Patentamt

(19) European Patent Office   (11) Numéro de publication: **0 117 192**

Office européen des brevets   **B1**

(12)   **FASCICULE DE BREVET EUROPÉEN**

(45) Date de publication du fascicule du brevet:   (51) Int. Cl.⁴: **F 16 D 55/224**
12.08.87

(21) Numéro de dépôt: **84400261.8**

(22) Date de dépôt: **08.02.84**

(54) Frein à disque.

(30) Priorité: **11.02.83 FR 8302212**

(43) Date de publication de la demande:
**29.08.84 Bulletin 84/35**

(45) Mention de la délivrance du brevet:
**12.08.87 Bulletin 87/33**

(84) Etats contractants désignés:
**DE GB IT NL SE**

(56) Documents cité:
**EP-A-0 030 184**
**EP-A-0 036 368**
**EP-A-0 099 781**
**EP-A-0 114 549**
**EP-A-0 305 002**
**FR-A-2 221 647**
**FR-A-2 272 296**
**FR-A-2 342 431**
**FR-A-2 409 423**
**GB-A-2 039 646**

(73) Titulaire: **BENDIX France, 126, rue de Stalingrad, F-93700 Drancy (FR)**

(72) Inventeur: **Mery, Jean-Claude, 61, rue Emile Zola, F-93320 Pavillons-sous-Bois (FR)**
Inventeur: **Thioux, Alain, 9, Allée des Bordes, F-94430 Chennevieres (FR)**

(74) Mandataire: **Poidatz, Emmanuel, Service Brevets Bendix 44 rue François 1er, F-75008 Paris (FR)**

## Description

La présente invention concerne un frein à disque du type comportant au moins un disque de frein rotatif; des patins de friction susceptibles d'être appliqués contre les faces latérales dudit disque, chacun de ces patins comprenant une garniture de friction et une plaque-portegarniture; un support fixe présentant des bras extrêmes transversaux s'étendant par-dessus une partie du pourtour du disque de frein et définissant entre eux un évidement central dans le support fixe et des moyens de guidage transversal pour supporter les patins de friction et guider leur mouvement parallèlement à l'axe du disque de frein; un étrier qui, vu dans le sens de la marche avant, est monté sur le bras transversal arrière du support fixe à l'aide d'une colonnette de façon à pouvoir coulisser le long de cette colonnette et pivoter autour d'un centre de rotation formé par la colonnette, l'étrier coiffant les patins de friction et la partie du ou des disques de frein placée entre lesdits patins; un moteur de commande monté dans l'étrier et susceptible de pousser le patin intérieur en direction du patin extérieur dont la plaque- porte-garniture prend appui contre le nez de l'étrier; ainsi que des moyens de verrouillage associés au bras avant du support fixe et établissant entre ledit bras avant et l'étrier une liaison qui permet le coulissement, mais empêche le pivotement dudit étrier, les plaques-porte-garnitures comportant, aux deux extrémités avant et arrière, près de leur bord supérieur, des becs d'appui et de verrouillage avant et arrière surplombant des échancrures de retenue, avant et arrière, respectivement, les bras extrêmes présentant du côté intérieur de l'évidement central du support fixe des barrettes avant et arrière de guidage et de verrouillage correspondants surplombant l'évidement central, la face inférieure de la barrette de guidage avant et la face correspondante de l'échancrure de retenue avant des plaques-porte-garniture délimitant entre elles un intervalle de blocage, l'extrémité avant de l'étrier présentant une échancrure de blocage dont la face active est, en position de travail de l'étrier, parallèle à la face inférieure de la barrette avant, alignée avec la face inclinée des échancrures de retenue avant.

Ce type de frein est connu du document EP-A-0 030 502, et présente l'inconvénient soit de n'avoir des moyens de verrouillage que pour l'étrier, soit de nécessiter des moyens de verrouillage distincts pour les patins de friction dans leurs logements de guidage, d'une part, et pour l'étrier, d'autre part. Dans le premier cas, les patins de friction ne sont pas tenus en contact permanent avec leurs logements de guidage correspondants. Dans le second cas, le nombre des organes supplémentaires est accru. Dans les deux cas, la mise en oeuvre des moyens de verrouillage exige des aménagements particuliers aussi bien sur l'étrier que sur le bras avant du support fixe.

La présente invention a pour but de supprimer ces inconvénients et de proposer un frein à disque qui assure avec des moyens simples un verrouillage efficace des patins de friction et de l'étrier, étant entendu que ce verrouillage doit permettre les mouvements de translation des patins et de l'étrier parallèlement aux axes du disque de frein et de la colonnette unique.

Ce but est atteint conformément à l'invention, du fait qu'une clavette de retenue est disposée dans ledit intervalle de blocage et coopère avec la face active de l'échancrure de blocage dans une zone voisine de la plaque-porte-garniture de l'un des patins de friction, le rayon de la partie radiale la plus externe de la face active de l'échancrure de blocage, à partir dudit centre de rotation, étant inférieur au rayon de la partie la plus interne de la face de la barrette avant afin de permettre le pivotement de l'étrier autour dudit centre de rotation formé par la colonnette, après retrait de la clavette de retenue, sans déplacement axial de l'étrier et sans déplacement des plaques-porte-garniture.

Grâce à cette conception, une partie (la barrette avant et la clavette de retenue) des moyens de verrouillage des patins de friction sert en même temps d'organe de blocage dans les moyens de verrouillage de l'étrier.

Cette conception simplifie non seulement le montage du frein ou le remplacement des pièces usées dudit frein, mais supprime pratiquement aussi tout oubli de verrouillage. En outre, l'objet de l'invention est particulièrement avantageux pour les freins multidisques.

Avantageusement, chaque barrette de guidage et de verrouillage présente la forme d'un dièdre dont l'angle est aigu et dont la face supérieure est perpendiculaire au plan médian radial du frein et les échancrures de retenue des plaques-porte-garnitures présentent une forme correspondante.

L'échancrure de blocage de l'étrier présente également la forme d'un dièdre dont l'angle est aigu et identique à celui de la barrette avant du support fixe.

L'échancrure de blocage de l'étrier est ménagée dans une protubérance frontale de l'étrier située devant et, vu en hauteur, de part et d'autre de l'arête du dièdre de la barrette avant lorsque l'étrier se trouve en position de travail.

La clavette de retenue présente avantageusement la forme d'un dièdre dont l'angle est identique à celui du dièdre de la barrette avant, et la face supérieure de l'aile supérieure de ladite clavette se trouve dans le même plan perpendiculaire au plan médian radial du frein que la face supérieure de la barrette arrière et des faces supérieures des échancrures de retenue des plaques-portes-garnitures et de l'échancrure de blocage de l'étrier lorsque celui-ci occupe sa position de travail.

L'objet de l'invention sera encore mieux compris à l'aide de la description suivante d'un mode de réalisation illustré par le dessin annexé sur lequel:

- la fig. 1 est une vue en élévation sur le côté extérieur du frein à disque;

- la fig. 2 est une vue en élévation d'une coupe radiale médiane à travers le frein à disque suivant la ligne II-II de la figure 1 et

- la figure 3 est une vue en plan du frein à disque.

Le frein à disque 1 représenté sur le dessin annexé est un frein multidisques, mais pourrait aussi être un frein à disque unique. Ce frein 1 comporte un premier disque rotatif 2 dit extérieur et un second disque rotatif 3 dit intérieur, tous deux montés sur un moyeu 4 dont l'axe coïncide avec ceux des disques 2 et 3, le disque intérieur étant, en outre, monté sur ledit moyeu 4 de façon à pouvoir coulisser parallèlement à l'axe de celui-ci.

Chaque disque de frein 2 ou 3 coopère avec une paire de patins de friction 5 et 6 ou 7 et 8 disposés de part et d'autre du disque de frein correspondant 2 ou 3 et susceptibles d'être appliqués contre les faces latérales de celui-ci. Un support fixe 9 comportant un flasque latéral 10 parallèle aux disques de frein 2, 3 est muni d'un évidement central 11 et de deux bras extrêmes transversaux 12,13, le flasque latéral 10 étant disposé parallèlement à et à côté du disque intérieur 3. Les bras transversaux 12,13 sont situés aux extrémités supérieures du flasque 10 et s'étendent parallèlement à l'axe des disques 2,3 au-dessus d'une partie de la périphérie de ceux-ci et en avant et en arrière des patins de friction 5,6 et 7,8. Chacun de ces patins de friction comprend une garniture de friction 14 et une plaque-porte-garniture 15. Dans le cas présent, les deux plaques-porte-garnitures, en principe juxtaposées du patin intérieur 6 du disque extérieur 2 et du patin extérieur 7 du disque intérieur 3, sont réalisées d'une seule pièce de façon à ne former qu'une plaque unique 16.

Sur les bras transversaux 12, 13 du support fixe 9 sont prévues vis-à-vis des extrémités supérieures des plaques porte-garnitures 14, 15 des barrettes de guidage et de verrouillage 17 et 18 qui surplombent l'évidement central 11 et son prolongement axial vers l'extérieur du frein 1 et qui constituent des moyens de guidage transversaux pour supporter les patins de friction 5 à 8 et guider leur mouvement parallèlement à l'axe des disques de frein 2,3.

Un étrier 19 est disposé entre les deux bras transversaux 12,13 par-dessus les disques de frein 2,3 et leurs patins de friction 5 à 8 de façon à coiffer l'ensemble disques-patins et à pouvoir se déplacer à travers l'évidement central 11 du support fixe 9 parallèlement à l'axe des disques de frein 2,3. Vu dans le sens de la rotation des disques 2,3 correspondant à la marche avant, l'étrier 19 est monté sur le bras transversal arrière 13 à l'aide d'une colonnette 20 de façon à pouvoir pivoter autour de l'axe de ladite colonnette 20 parallèle à l'axe des disques 2,3. Dans le cas présent, la colonnette 20 est fixée sur une oreille arrière 21 de l'étrier 19 et coulisse dans l'alésage d'un palier 22 incorporé au bras arrière 13. Dans la partie intérieure de l'étrier 19 est prévu un moteur de commande tel qu'un vérin hydraulique 23 dont la partie mobile ou piston 24 est susceptible d'agir sur la plaque-porte-garniture 15 du patin intérieur 8 et, par réaction et par l'intermédiaire de son nez échancré 25, sur la plaque porte-garniture 15 du patin extérieur 5. L'évidement central 11 est de dimensions telles que, compte tenu de la configuration des faces avant et arrière de l'étrier 19, celui-ci puisse pivoter autour de l'axe de la colonnette 20 sans qu'il se heurte contre la face interne dudit évidement ou contre une des barrettes 17, 18 des bras transversaux 12, 13.

Les extrémités avant et arrière des plaques-porte-garnitures 15 et 16 présentent, près de leur bord supérieur et en face des barrettes de guidage 17 et 18, des becs d'appui et de verrouillage 26, 27 surplombant une échancrure de retenue 28,29 pratiquée dans la face avant ou arrière desdites plaques 15, 16 et présentant une forme de dièdre dont l'angle est aigu, l'une des faces de chaque échancrure de retenue 28 ou 29 coïncidant avec la face inférieure du bec d'appui correspondant 26 ou 27. L'échancrure de retenue 28 ou 29 est ouverte vers la barrette correspondante avant 17 ou arrière 18.

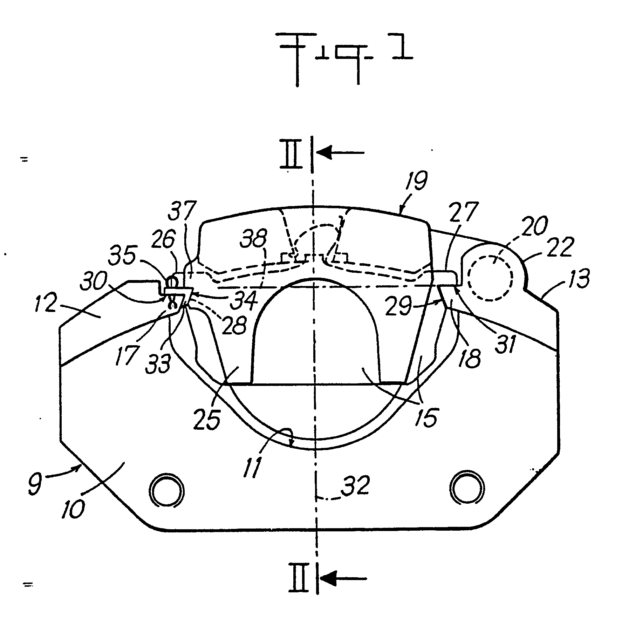

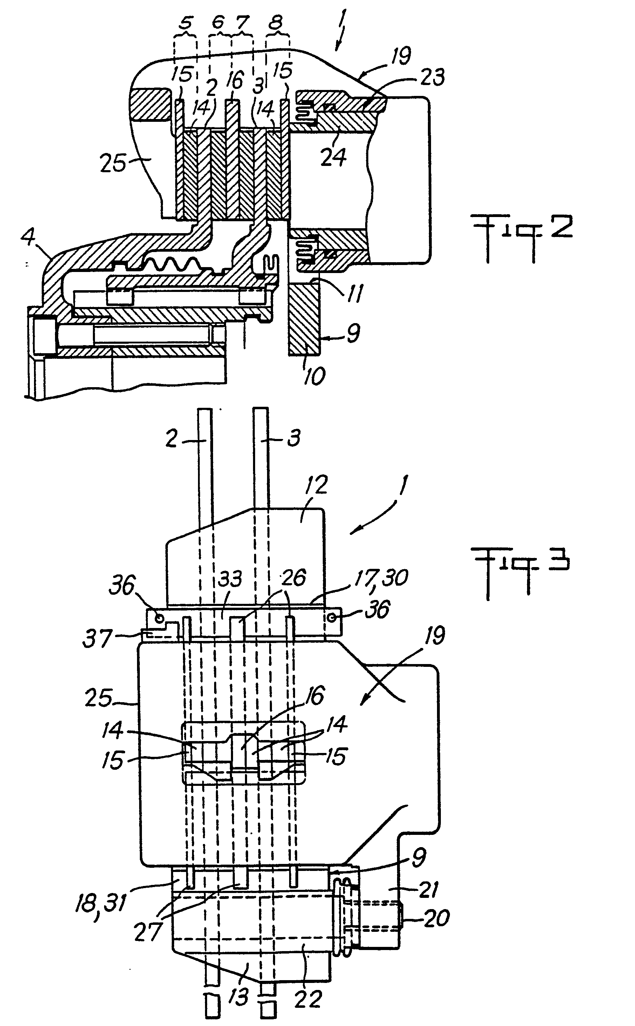

Chaque barrette de guidage et de verrouillage 17,18 présente la forme d'un dièdre dont l'arête est parallèle à l'axe des disques de frein 2 et 3 et de la colonnette 20, dont l'angle est aigu et dont la face supérieure 30 ou 31 est perpendiculaire au plan médian radial 32 du frein 1. Bien entendu, les échancrures de retenue 28,29 des plaques porte-garniture 15,16 présentent une forme diédrique correspondant à celle des dièdres des barrettes 17, 18 qui, en position de travail et de verrouillage (fig. 1), pénètrent dans les èchancrures de retenue correspondantes 28 ou 29. Comme on peut le voir clairement sur la fig. 1, en position de verrouillage, la barrette arrière 18 pénètre entièrement dans l'échancrure de retenue arrière 29 des plaques-porte-garnitures 15,16 de sorte que la face inclinée inférieure et la face horizontale supérieure de ladite échancrure 29, face horizontale qui, en même temps, constitue la face inférieure du bec d'appui arrière 27 desdites plaques 15, 16, portent complètement contre les faces correspondantes de la barrette arrière 18. En outre, dans cette position de verrouillage, la face inférieure inclinée de la barrette avant 17 et la face inférieure correspondante de l'échancrure de retenue avant 28 des plaques porte-garnitures 15,16 qui, dans cette position de verrouillage, sont parallèles l'une à l'autre, délimitent entre elles un intervalle de blocage dans lequel s'insert une clavette de retenue 33 qui fait partie des moyens de verrouillage des patins de friction 5 à 8. On comprend aisément que, dans cette position, les plaques-porte-garnitures 15,16 dont la partie située en dessous des arêtes des barrettes 17,18 a une longueur maximale légèrement inférieure à la distance entre les deux arêtes desdites barrettes 17, 18, sont parfaitement retenues sur ces barrettes tout en pouvant coulisser le long desdites barrettes.

L'extrémité avant de l'étrier 19 présente, par exemple du côté extérieur, c'est-à-dire du nez 25, une échancrure de blocage 34 qui, en position de travail de l'étrier 19, est alignée avec les échancrures de retenue avant 28 des plaques porte-garnitures 15,16. Autrement dit, l'échancrure de blocage 34 de l'étrier 19 possède une face active qui, en position de travail de l'étrier 19, est parallèle à la face inférieure de la barrette avant 17, alignée avec les faces inférieures des échancrures de retenue avant 28 et qui coopère avec la clavette de retenue 33 dans une zone voisine de la plaque-porte-garniture 15,16 de l'un des patins de friction 5 à 8. Dans le cas présent, l'échancrure de blocage 34 est prévue avantageusement du côté du nez 25 de l'étrier 19 de sorte que sa face active coopère avec la partie extrême extérieure de la clavette 33 dans la zone voisine de la plaque-porte-garniture extérieure 15.

L'échancrure de blocage 34 de l'étrier 19 présente également la forme d'un dièdre dont l'angle est aigu et identique à celui de la barrette avant 17, du support fixe 9.

La clavette, de retenue 33 dépasse de part et d'autre du bras avant 12 et est assurée contre tout déplacement transversal intempestif par rapport aux faces latérales dudit bras 12, à l'aide de deux goupilles 35 engagées dans des trous correspondants 36 de la clavette 33, ces trous 36 étant disposés en porte-à-faux par rapport aux faces latérales du bras avant 12. Autrement dit, les parties extrêmes de la clavette 33 dépassent de part et d'autre des faces latérales du bras avant 12 et, dans le cas présent, c'est l'extrémité extérieure de la clavette 33 qui sert au verrouillage de l'étrier 19 en position de travail. On comprend à la vue du dessin que tout mouvement de pivotement de l'étrier autour de l'axe de la colonnette 20 est empêché et se traduit par une application de la clavette 33 contre la face inférieure inclinée de la barrette avant 17 ou contre la face supérieure 30 de la même barrette avant 17 suivant le sens de pivotement. Par contre les dimensions du pourtour de l'étrier 19 sont telles qu'une fois la clavette 33 enlevée, la partie frontale de l'étrier 19 peut passer sans encombre devant l'arête de la barrette avant 17.

L'échancrure de blocage 34 de l'étrier 19 est ménagée dans une protubérance frontale 37 de l'étrier 19, cette protubérance 37 étant placée devant et, vue en hauteur, de part et d'autre de l'arête du dièdre de la barrette avant 17 lorsque ledit étrier se trouve en position de travail. Dans le cas où la clavette de retenue 33 présente la forme d'un dièdre dont l'angle est identique à celui du dièdre de la barrette avant 17, la clavette épouse parfaitement la forme de ladite barrette avant et couvre entièrement la barrette avant 17 et constitue les surfaces de coulissement et d'appui pour les extrémités avant des plaques-porte-garnitures 15,16 et l'étrier 19 dont la protubérance 37 peut reposer, par la face supérieure de l'échancrure de blocage 34 sur l'aile supérieure de la clavette 33. En position de travail de l'étrier 19, la face supérieure de l'aile supérieure de la clavette 33 se trouve dans le même plan 38 perpendiculaire au plan médian radial 32 du frein 1 que la face supérieure 31 de la barrette arrière 18 et les faces supérieures des échancrures de retenue 28,29 des plaques-porte-garnitures 15,16 et de l'échancrure de blocage 34 de l'étrier 19.

Le mode de réalisation précédemment décrit peut subir un certain nombre de modifications sans que l'on sorte pour cela du cadre de protection de l'invention dont les limites sont définies par les revendications annexées. Ainsi il est possible de donner à la clavette de retenue 33 une longueur telle qu'elle s'étende au moins approximativement jusqu'à la face extérieure du nez 25 de l'étrier 19, lorsque les garnitures 14 sont neuves et de prévoir pour la protubérance 37 une largeur axiale suffisante pour qu'elle couvre à la fois l'extrémité extérieure de la clavette 33 et l'extrémité extérieure de la barrette avant 17 lorsque l'étrier 19 occupe une position axiale qui correspond à des garnitures neuves 14.

**Revendications**

1. Frein à disque du type comportant au moins un disque de frein rotatif (2,3); des patins de friction (5 à 8) susceptibles d'être appliqués contre les faces latérales dudit disque (2,3), chacun de ces patins (5 à 8) comprenant une garniture de friction (14) et une plaque-porte-garniture (15 ou 16); un support fixe (9) présentant des bras extrêmes transversaux (12,13) s'étendant par-dessus une partie du pourtour du disque de frein (2,3) et définissant entre eux un évidement central (11) dans le support fixe (9) et des moyens de guidage transversal (17,18) pour supporter les patins de friction (5 à 8) et guider leur mouvement parallèlement à l'axe du disque de frein (2,3); un étrier (19) qui, vu dans le sens de la marche avant, est monté sur le bras transversal arrière (13) du support fixe (9) à l'aide d'une colonnette (20) de façon à pouvoir coulisser le long de cette colonnette (20) et pivoter autour d'un centre de rotation formé par la colonnette (20), l'étrier (19) coiffant les patins de friction (5 à 8) et la partie du ou des disques de frein (2,3) placée entre lesdits patins (5 à 8); un moteur de commande (23) monté dans l'étrier et susceptible de pousser le patin intérieur (8) en direction du patin extérieur (5) dont la plaque- porte-garniture (15) prend appui contre le nez (25) de l'étrier (19); ainsi que des moyens de verrouillage (17,33,34) associés au bras avant (12) du support fixe (9) et établissant entre ledit bras avant (12) et l'étrier (19) une liaison qui permet le coulissement, mais empêche le pivotement dudit étrier (19), les plaques-porte-garnitures (15,16) comportant, aux deux extrémités avant et arrière, près de leur bord supérieur, des becs d'appui et de verrouillage (26,27) avant et arrière surplombant des échancrures de retenue (28,29), avant et arrière, respectivement, les bras extrémes (12,13) présentant du côté intérieur de l'évidement central (11) du support fixe (9) des barrettes avant et arrière de guidage et de verrouillage (17,18) correspondants surplombant l'évidement central (11), la face inférieure de la barrette de guidage avant (17) et la face correspondante de l'échancrure de retenue avant (28) des plaques-porte-garniture (15,16) délimitant entre elles un intervalle de blocage, l'extrémité avant de l'étrier (19) présentant une échancrure de blocage (34) dont la face active est, en position de travail de l'étrier (19), parallèle à la face inférieure de la barrette avant (17), alignée avec la face inclinée des échancrures de retenue avant (28), caractérisé en ce que une clavette de retenue (33) est disposée dans ledit intervalle de blocage et coopère avec la face active de l'échancrure de blocage (34) dans une zone voisine de la plaque-porte-garniture (15,16) de l'un des patins de friction (5 à 8), le rayon de la partie radiale la plus externe de la face active de l'échancrure de blocage (34), à partir dudit centre de rotation, étant inférieur au rayon de la partie la plus interne de la face de la barrette avant (17) afin de permettre le pivotement de l'étrier (19) autour dudit centre de rotation formé par la colonnette (20), après retrait de la clavette de retenue (33), sans déplacement axial de l'étrier et sans déplacement des plaques-porte-garniture (15,16).

2. Frein à disque selon la revendication 1 caractérisé en ce que chaque barrette de guidage et de verrouillage (17,18) présente la forme d'un dièdre dont l'angle est aigu et dont la face supérieure est perpendiculaire au plan médian radial (32) du frein (1) et les échancrures de retenue (28,29) des plaques-porte-garnitures (15,16) présentent une forme correspondante.

3. Frein à disque selon l'une des revendications 1 et 2, caractérisé en ce que l'échancrure de blocage (34) de l'étrier (19) présente la forme d'un dièdre dont l'angle est aigu et identique à celui de la barrette avant (17) du support fixe (9).

4. Frein à disque selon l'une des revendications 1 à 3, caractérisé en ce que l'échancrure de blocage (34) de l'étrier (19) est ménagée dans une protubérance frontale (37) de l'étrier (19) située devant et, vue en hauteur, de part et d'autre de l'arête du dièdre de la barrette avant (17) lorsque l'étrier (19) se trouve en position de travail.

5. Frein à disque selon l'une des revendications 1 à 4, caractérisé en ce que la clavette de retenue (33) présente la forme d'un dièdre dont l'angle est identique à celui du dièdre de la barrette avant (17).

6. Frein à disque selon l'une des revendications 1 à 5, caractérisé en ce que la clavette de retenue (33) recouvre entièrement la barrette avant (17) et constitue les surfaces de coulissement et d'appui pour les extrémités avant des plaques-porte-garnitures (15,16) et la protubérance (37) de l'étrier (19).

7. Frein à disque selon l'une des revendications 1 à 6, caractérisé en ce que la face supérieure de l'aile supérieure de la clavette (33) se trouve dans le même plan (38) perpendiculaire au plan médian radial (32) du frein (1) que la face supérieure (31) de la barrette arrière (18) et des faces supérieures des échancrures de retenue (28,29) des plaques-porte-garnitures (15,16) et de l'échancrure de blocage (34) de l'étrier (19) lorsque celui-ci occupe sa position de travail.

8. Frein à disque selon l'une des revendications 1 à 7, caractérisé en ce que la clavette de retenue (33) s'étend au moins approximativement jusqu'à la face extérieure ou nez (25) de l'étrier (19) lorsque les garnitures (14) sont neuves.

9. Frein à disque selon l'une des revendications 1 à 8, caractérisé en ce que la protubérance frontale (37) de l'étrier (19) possède une largeur axiale suffisante pour qu'elle couvre à la fois l'extrémité extérieure de la clavette (33) et l'extrémité extérieure de la barrette avant (17) lorsque l'étrier (19) occupe une position axiale qui correspond à des garnitures neuves (14).

**Patentansprüche**

1. Scheibenbremse mit mindestens einer umlaufenden Bremsscheibe (2,3), Bremsbacken (5-8), die gegen die Seitenflächen der Bremsscheibe (2,3) andrückbar sind, wobei jeder der Bremsbacken (5-8) einen Bremsbelag (14) und einen Belagträger (15 oder 16) aufweist, einem festliegenden Bremsträger (9), der quer verlaufende außenliegende Arme (12,13) aufweist, welche sich über einen Umfangsabschnitt der Bremsscheibe (2,3) erstrecken und zwischen sich eine zentrale Ausnehmung (11) im Bremsträger (9) sowie quer verlaufende Führungen (17,18) zum Abstützen der Bremsbacken (5-8) und zum Führen ihrer Bewegung parallel zur Achse der Bremsscheibe (2,3) bilden, einem Bremssattel (19), der, in Richtung der Vorwärtsbewegung gesehen, an dem rückwärtigen quer verlaufenden Arm (13) des Bremsträgers (9) mit Hilfe eines Bolzens (20) so gelagert ist, daß er auf diesem Bolzen (20) gleiten und um einen von dem Bolzen (20) gebildeten Drehmittelpunkt schwenken kann, wobei der Bremssattel (19) die Bremsbacken (5-8) sowie den zwischen den Bremsbacken (5-8) angeordneten Abschnitt des oder der Bremsscheiben (2,3) übergreift, einem Bremsmotor (23), der im Bremssattel untergebracht ist und den inneren Bremsbacken (8) in Richtung auf den äußeren Bremsbacken (5) verschieben kann, dessen Belagträger (15) an dem Außenschenkel (25) des Bremsbackens (19) angreift, sowie Verriegelungsmitteln (17,33,34), die dem vorderen Arm (12) des Bremsträgers (9) zugeordnet sind und zwischen diesem vorderen Arm (12) und dem Bremssattel (9) eine Verbindung bilden, welche die Gleitbewegung des Bremssattels (19) ermöglicht, jedoch ein Schwenken desselben verhindert, wobei die Belagträger (15, 16) an ihrem vorderen und rückwärtigen Ende nahe an ihrem oberen Rand eine vordere und rückwärtige Anlage- und Verriegelungsnase (26,27) aufweisen, die über eine vordere bzw. hintere Haltenut (28,29) vorstehen, wobei die außenliegenden Arme (12,13) auf der Innenseite der zentralen Ausnehmung (11) des Bremsträgers (9) einen vorderen und einen rückwärtigen Führungs- und Verriegelungssteg (17,18) aufweisen, die einander entsprechen und über die zentrale Ausnehmung (11) vorstehen, wobei die Innenseite des vorderen Führungssteges (17) und die entsprechende Seite der vorderen Haltenut (28) der Belagträger (15,16) zwischen sich einen Zwischenraum begrenzen, wobei das vordere Ende des Bremssattels (19) eine Blockiernut (34) aufweist, deren wirksame Fläche in der Arbeitsstellung des Bremssattels (19) parallel zur Innenseite des vorderen Führungssteges (17), ausgerichtet zur geneigten Seite der vorderen Haltenuten (28) verläuft, dadurch gekennzeichnet, daß ein Haltekeil (33) in dem Zwischenraum angeordnet ist und mit der wirksamen Fläche der Blockiernut (34) in einem zum Belagträger (15,16) eines der Bremsbacken (5-8) benachbarten Bereich zusammenwirkt, wobei der vom Drehmittelpunkt ausgehende Radius des am weitesten außenliegenden Abschnitts der wirksamen Fläche der Blockiernut (34) kleiner ist als der Radius des am weitesten innenliegenden Abschnittes der Seite des vorderen Führungssteges (17), um ein Schwenken des Bremssattels (19) um den vom Bolzen (20) gebildeten Drehmittelpunkt nach Entfernen des Haltekeiles (33), ohne axiale Verschiebung des Bremssattels und ohne Verschiebung der Belagträger (15,16), zu ermöglichen.

2. Scheibenbremse nach Anspruch 1, dadurch gekennzeichnet, daß jeder Führungs- und Verriegelungssteg (17,18) die Form eines Dieders hat, dessen Winkel spitz ist und dessen Oberseite senkrecht zur radialen Mittelebene (32) der Bremse (1) verläuft, und daß die Haltenuten (28,29) der Belagträger (15,16) eine entsprechende Form besitzen.

3. Scheibenbremse nach einem der Ansprüche 1 und 2, dadurch gekennzeichnet, daß die Blockiernut (34) des Bremssattels (19) die Form eines Dieders besitzt, dessen Winkel spitz und identisch zu dem des vorderen Führungssteges (17) des Bremsträgers (9) ist.

4. Scheibenbremse nach einem der Ansprüche I-3, dadurch gekennzeichnet, daß die Blockiernut (34) des Bremssattels (19) in einem frontalen Vorsprung (37) des Bremssattels (19) gebildet ist, der vor und - in Höhenrichtung gesehen - beidseitig zu der Spitze des Dieders des vorderen Führungssteges (17) angeordnet ist, wenn sich der Bremssattel (19) in der Arbeitsstellung befindet.

5. Scheibenbremse nach einem der Ansprüche I-4, dadurch gekennzeichnet, daß der Haltekeil (33) die Form eines Dieders besitzt, dessen Winkel identisch ist zu dem des Dieders des vorderen Führungssteges (17).

6. Scheibenbremse nach einem der Ansprüche I-5, dadurch gekennzeichnet, daß der Haltekeil (33) den vorderen Führungssteg vollständig überdeckt und die Gleit- und Anlageflächen für die vorderen Enden der Belagträger (15,16) und den Vorsprung (37) des Bremssattels (19) bildet.

7. Scheibenbremse nach einem der Ansprüche I-6, dadurch gekennzeichnet, daß die Oberseite des oberen Schenkels des Haltekeiles (33) sich in derselben Ebene (38), die senkrecht zur radialen Mittelebene (32) der Bremse (1) verläuft, befindet wie die Oberseite (31) des rückwärtigen Führungssteges (18) und die Oberseiten der Haltenuten (28,29) der Belagträger (15,16) und der Blockiernut (34) des Bremssattels (19), wenn dieser seine Arbeitsstellung einnimmt.

8. Scheibenbremse nach einem der Ansprüche I-7, dadurch gekennzeichnet, daß der Haltekeil (33) sich mindestens ungefähr bis zur Außenseite bzw. dem Außenschenkel (25) des Bremssattels (19) erstreckt, wenn die Beläge (14) neu sind.

9. Scheibenbremse nach einem der Ansprüche I-8, dadurch gekennzeichnet, daß der frontale Vorsprung (37) des Bremssattels (19) eine axiale Breite besitzt, die ausreicht, damit er gleichzeitig das außenliegende Ende des Haltekeiles (33) und das außenliegende Ende des vorderen Führungssteges (17) bedeckt, wenn der Bremssattel (19) eine axiale Stellung einnimmt, die neuen Belägen (14) entspricht.

## Claims

1. A disc brake of the type comprising at least one rotary brake disc (2,3); brake pads (5-8) adapted to be urged against the lateral faces of said disc (2,3), each of said pads (5-8) comprising a friction lining (14) and a lining support plate (15 or 16); a fixed support (9) presenting transverse external arms (12,13) extending over a circumferential portion of the brake disc (2,3) and defining between them a central aperture (11) in the fixed support (9) and transverse guiding means (17,18) for supporting the friction pads (5-8) and guiding their movement parallel to the axis of the brake disc (2,3); a caliper (19), as seen in the sense of forward movement, is mounted on the rear transverse arm (13) of the fixed support (9) by means of a pin (20) such as to be able to slide along said pin (20) and to pivot about a center of rotation formed by the pin (20), the caliper (19) straddling the friction pads (5-8) and the portion of the brake disc or discs (2,3) disposed between said pads (5-8); and an actuating motor (23) mounted in the caliper and adapted to urge the internal pad (8) towards the external pad (5), the lining support plate (15) of which is in abutment with the outer leg (25) of the claiper (19); and locking means (17,33,34) associated with the forward arm (12) of the fixed support (9) and establishing between said forward arm (12) and the caliper (19) a connection which allows sliding, however prevents pivoting of said claiper (19), the lining support plates (15,16) comprising at the two forward and rearward ends, close to their outer edge, forward and rearward locking and engagement noses (26,27) delimiting forward and rearward retaining grooves (28,29), respectively, the outer arms (12,13) presenting at the internal side of the central recess (11) of the fixed support (9) forward and rearward corresponding locking and guiding rails (17,18) delimiting the central recess (11), the lower face of the forward guiding rail (17) and the corresponding face of the forward retaining groove (28) of the lining support plate (15,16) delimiting between them a blocking gap, the forward extremity of the caliper (19) presenting a blocking groove (34) having an active face which, when the caliper (19) in its operative position, is parallel to the lower face of the forward rail (17), aligned to the inclined face of the forward retaining grooves (28), characterized in that a retaining key (33) is disposed in said blocking gap and cooperates with the active face of the blocking groove (34) in a zone adjacent to the lining support plate (15,16) of one of the friction pads (5-8), the radius of the outermost radial portion of the active face of the blocking groove (34) with respect to said center of rotation being smaller than the radius of the innermost portion of the face of the forward rail (17) in order to allow the pivoting of the caliper (19) about said center of rotation formed by the pin (20) after withdrawal of the retaining key (33), without axial displacement of the caliper and without displacement of the lining support plates (15,16).

2. Brake disc according to claim 1, characterized in that each locking and guide rail (17,18) presents the form of a dihedral having an acute angle and an upper face which is perpendicular to the radial middle plane (32) of the brake (1), and the retaining grooves (28,29) of the lining support plates (15,16) are of a corresponding form.

3. Brake disc according to any of claims 1 and 2, characterized in that the blocking groove (34) of the caliper (19) is in the form of a dihedral having an acute angle identical to that of the front rail (17) of the fixed support (9).

4. Brake disc according to any of claims 1 to 3, characterized in that the blocking groove (34) of the caliper (19) is provided in a frontal projection (37) of the caliper (19) situated before and, as seen in an upward direction, on either side of the apex of the dihedral of the forward rail (17) when the caliper (19) is in its operative position.

5. Brake disc according to any of claims 1 to 4, characterized in that the retaining key (33) is in the form of a dihedral having an angle which is identical to that of the dihedral of the forward rail (17).

6. Brake disc according to any of claims 1 to 5, characterized in that the retaining key (33) completely covers the forward rail (17) and constitutes the engagement and sliding surfaces for the forward extremities of the lining support plates (15, 16) and the projection (37) of the caliper (19).

7. Brake disc according to any of claims 1 to 6, characterized in that the upper face of the upper leg of the key (33) is situated in the same plane (38) perpendicular to the radial middle plane (32) of the brake (1) as the upper face (31) of the rearward rail (19) and upper faces of the retaining grooves (28,29) of the lining support plates (15,16) and of the blocking groove (34) of the caliper (19) when the latter occupies its operative position.

8. Brake disc according to any of claims 1 to 7, characterized in that the retaining key (33) extends at least approximately to the outer face or outer leg (25) of the caliper (19) when the linings (14) are new.

9. Brake disc according to any of claims 1 to 8, characterized in that the frontal projection (37) of the claiper (19) has an axial width sufficient to cover at the same time the outer extremity of the key (33) and the outer extremity of the forward rail (17) when the caliper (19) occupies an axial position which corresponds to the linings (14) being new.

Fig. 1

Fig 2

Fig 3